# EUROPÄISCHE PATENTSCHRIFT

(11) **EP 1 706 633 B1**
(45) Veröffentlichungstag und Bekanntmachung des Hinweises auf die Patenterteilung: **08.05.2013**
(21) Anmeldenummer: 04804664.3
(22) Anmeldetag: 02.12.2004
(51) Int. Cl.: F02M 51/06, F02M 61/20, F02M 61/14, F02M 63/00

(54) **INJEKTOR MIT EINER SPANNVORRICHTUNG ZUM EINBAU IN EINEM ZYLINDERKOPF SOWIE SPANNVORRICHTUNG**
INJECTOR COMPRISING A CLAMPING DEVICE TO BE MOUNTED IN A CYLINDER HEAD, AND CLAMPING DEVICE
INJECTEUR DE CARBURANT COMPRENANT UN DISPOSITIF DE PINCE DESTINÉ À ÊTRE MONTÉ DANS UNE CULASSE ET DISPOSITIF DE PINCE

(30) Priorität: 05.12.2003 DE 10356856
(43) Veröffentlichungstag der Anmeldung: 04.10.2006
(73) Patentinhaber: Continental Automotive GmbH, 30165 Hannover (DE)
(72) Erfinder: DICK, Jürgen, 93164 Laaber (DE); LIXL, Heinz, 93053 Regensburg (DE); SIMMET, Martin, 93077 Bad Abbach (DE)
(86) Internationale Anmeldenummer: PCT/EP2004/053245
(87) Internationale Veröffentlichungsnummer: WO 2005/054661

(56) Entgegenhaltungen:
- EP-A- 0 819 846
- EP-A- 1 099 850
- GB-A- 774 206
- JP-A- 3 182 680

## Beschreibung

Die Erfindung geht von einem Injektor für die Kraftstoffeinspritzung in einen Zylinder einer Brennkraftmaschine aus, bei dem ein Injektorgehäuse (oberer Teil des Injektors) und ein Düsengehäuse (unterer Teil des Injektors) mittels einer Düsenspannmutter axial zusammengefügt sind, beziehungsweise von einer Spannvorrichtung nach der Gattung der nebengeordneten Ansprüche 1 und 8. Es ist schon bekannt, dass der Injektor zur Befestigung in eine Bohrung des Zylinderkopfes der Brennkraftmaschine eingeführt wird. Um einen sicheren Halt zu erhalten, greift am oberen Gehäuseteil des Injektorgehäuses eine Spannpratze ein, mit der der Injektor mit dem unteren Ende seines Düsengehäuses gegen eine Dichtfläche im Zylinderkopf gepresst wird. Die Spannpratze drückt mit großer Druckkraft auf das Gehäuse des Injektors, um die Dichtstelle zwischen dem Zylinderkopf und dem Injektor gegen den hohen Innendruck im Zylinder, der insbesondere bei der Verbrennung des Kraftstoff-Luftgemisches entsteht, sicher abzudichten.

Es ist weiter bekannt, dass durch die große Druckkraft der Spannpratze das Injektorgehäuse minimal verkürzt wird. Die Verkürzung betrifft allerdings nur das Injektorgehäuse und das Düsengehäuse, da über diese Bauteile die Kraftlinien von der Spannkratze bis zur Dichtfläche in der Bohrung des Zylinderkopfes verlaufen. Dadurch kommt es zu einer relativen Verschiebung der sich im Injektor befindlichen Hochdruckdichtfläche in Bezug auf das Antriebselement und das Servoventil. Auf die im Innern des Injektors befindlichen beweglichen Teile, insbesondere auf das Antriebselement (Aktor) und das Servoventil wirken keine Kraftlinien, so dass deren Länge unverändert erhalten bleibt.

Bisher wurde dieses Problem dadurch gelöst, das man zwischen den beweglichen Teilen, insbesondere zwischen dem Antriebselement und dem Servoventil ein gewisses vergrößertes Spiel eingebaut hat. Dieses Spiel soll unter anderem die Verkürzung des Injektorgehäuses kompensieren. Das Spiel muss umso größer sein, je größer der Druck der Spannpratze auf den Injektor einwirkt. Ein großes Spiel hat jedoch den Nachteil, dass der durch die Verkürzung verursachte Anteil des Ventilhubs vom Antriebselement zusätzlich aufzubringen ist, um das Ventil insbesondere sicher öffnen zu können. Dadurch muss bei Verwendung eines piezoelektrischen Aktors als Antriebselement ein längerer und damit teuerer Aktor verwendet werden, da der piezoelektrische Aktor aus physikalischern Gründen nur einen relativ kleinen Hub erzeugen kann, der im Bereich von nur einigen Mikrometer liegt.

Die JP 3 182 680 A beschreibt einen Abstandhalter, der an einem oberen Ende in Kontakt mit einem Druckbauteil ist, das eine Druckkraft auf den Abstandhalter leitet.

Der Erfindung liegt die Aufgabe zugrunde, einen Injektor beziehungsweise eine Spannvorrichtung für den Injektor so weiterzubilden, dass bei der Befestigung des Injektors in einer Bohrung des Zylinderkopfes einer Brennkraftmaschine die durch eine Spannpratze aufgebrachte Druckkraft nicht auf das Injektorgehäuse übertragen wird. Diese Aufgabe wird mit den Merkmalen der nebengeordneten Ansprüche 1 und 9 gelöst.

Bei dem Injektor besteht ein wesentlicher Vorteil darin, dass auf dem Mantel des Injektorgehäuses eine druckresistente zylinderförmige Injektorhülse angeordnet wird. Die Injektorhülse weist an ihrem unteren Ende eine Auflagefläche auf, mit der sie sich gegen eine entsprechend geformte Gegenfläche der Düsenspannmutter abstützt. Durch diese Maßnahme wird die Druckkraft der Spannpratze, die am oberen Ende der Injektorhülse eingeleitet wird, in vorteilhafter Weise über die Injektorhülse direkt zur unten liegenden Düsenspannmutter abgeleitet, so dass über das Injektorgehäuse keine Kraftlinien fließen, die zu einer unerwünschten Verkür-zung des Injektorgehäuses führen können. Als besonders vorteilhaft wird dabei angesehen, dass das vorzusehende Spiel zwischen den beweglichen Teilen im Innern des Injektorgehäuses, insbesondere zwischen dem Antriebselement und dem Servoelement verringert und somit das Antriebselement für einen kürzeren Hubweg dimensioniert werden kann. Dadurch können Fertigungskosten eingespart werden.

Um die Spannpratze einfach zu montieren und zugänglich zu machen, ist vorgesehen, die Länge der Ingektorhülse so zu wählen, dass sie nach ihrem Einbau in der Buhrung eine vorgegebene Länge aus dem Zylinderkopf herausragt. Dadurch kann sehr einfach die Spannpratze an den dafür vorgesehenen Aufnahmeflächen angestzt und die Spannpratze dann mit enem vorgegebenen Drehmoment angezogen werden.

Durch die in den Ansprüchen aufgeführten Maßnahmen sind vorteilhafte Weiterbildungen und verbesserungen des in den nebengeordneten Ansprüche 1 und 8 angegebenen Injektors beziehungsweise der Spannvorrichtung gegeben. Als besonders vorteilhaft erscheint die Lösung, dass die Injektorhülse an ihrem oberen Ende wenigstens eine Druckfläche aufweist, die mit der Injektorhülse entweder fest verbunden ist oder als separates Bauteil auf die Injektorhülse aufgesetzt ist. Das Kopfteil mit der Druckfläche kann dabei so ausgeformt sein, dass es bereits angepasste Aufnahmeflächen für die Spannpratze enthält. Diese Lösung wird als besonders günstig angesehen, da das Kopfteil beispielsweise durch Fräsen leichter hergestellt werden, als wenn es zusammen mit der Injektorhülse gefertigt werden müsste.

Die Injektorhülse wird bezüglich ihres Durchmessers so bemessen, dass sie gegenüber dem Injektorgehäuse relativ verschiebbar ist. Dadurch ist sichergestellt, dass die Kraftlinien, die beim Festziehen der Spannpratze in die Injektorhülse geleitet werden, vollständig vom Injektorgehäuse entkoppelt sind. Das Injektorgehäuse wird somit nicht belastet und kann sich daher auch nicht verkürzen.

Es ist weiterhin vorgesehen, dass der Innendurchmesser der Injektorhülse so bemessen ist, dass die Injektorhülse mit ihrer Innenwandung eng am Injektorgehäuse anliegt. Der Injektor erhält durch die Injektorhülse eine gute Stabilisierung und wird gegen seitliches Auslenken gestützt. Der Injektor kann dadurch sehr passgenau gegen die Dichtfläche in der Bohrung des Zylinderkopfes gepresst werden, so dass eine dauerhafte und zuverlässige Abdichtung entsteht.

Zur weiteren Stützung und Sicherung des Injektors ist vorgesehen, die Injektorhülse an ihrer äußeren Mantelfläche mit wenigstens einer Rippe auszubilden, deren Höhe bis zur Innenwandung der Bohrung ausgebildet ist. Die Rippen können tangential oder alternativ axial angeordnet sein und stellen für den Einbau des Injektors sehr einfache Führungs- und Justagehilfen dar.

Um eine möglichst gleichmäßige Druckverteilung auf die Injektorhülse aufbringen zu können, ist vorgesehen, dass die Spannpratze zwei gabelförmig ausgebildete Spannarme aufweist, zwischen die der Injektor einführbar ist. Somit kann die Druckkraft der Spannpratze an zwei sich gegenüber liegenden Seiten auf die Injektorhülse gleichmäßig verteilt und übertragen werden. Hinzu kommt, dass durch die Gabelform der Spannpratze der Injektor leichter festgeschraubt oder auch leichter gelöst werden kann.

Es ist weiterhin vorgesehen, dass die Injektorhülse schon in der Fertigung beim Zusammenbau der einzelnen Bauteile auf dem Injektor angebracht wird. Üblicherweise werden das Injektorgehäuse (Oberteil) und das unten angeordnete Düsenteil des Injektors mit einer Düsenspannmutter verschraubt. Bevor die Düsenspannmutter aufgesetzt werden kann, muss die Injektorhülse auf das Oberteil aufgeschoben werden, damit sich später die Injektorhülse mit ihrer unteren Auflagefläche gegen die Gegenfläche der Düsenspannmutter abstützen kann. Eine separate Montage der Injektorhülse ist beim Einbau des Injektors in den Zylinderköpf nicht mehr erforderlich. Des weiteren sind bezüglich der Injektorhülse beim Einbau keinerlei Justagearbeiten zu beachten, da der Injektor mit seiner Injektorhülse eine einzige Baueinheit bildet.

Um die Kraftlinien möglichst vollständig vom Injektorgehäuse fernzuhalten, ist alternativ auch vorgesehen, die Gegenfläche der Düsenspannmutter möglichst tief unten anzuordnen. Dieses kann zum Beispiel durch einen entsprechend ausgebildeten Verstärkungsring an der Düsenspannmutter erfolgen, der möglichst nahe an der Düsenspitze angeordnet wird, soweit dies die räumlichen Einbauverhältnisse zulassen.

Ein Ausführungsbeispiel der Erfindung ist in der Zeichnung dargestellt und wird in der nachfolgenden Beschreibung näher erläutert.
Figur 1 zeigt einen handelsüblichen Injektor mit einer bekannten Spannpratze,
Figur 2 zeigt ein Ausführungsbeispiel der Erfindung mit einer Injektorhülse,
Figur 3 zeigt ausschnittweise einen Querschnitt durch einen erfindungsgemäßen Injektor,
Figur 4 zeigt eine vergrößerte Teilansicht der Figur 3,
Figur 5 zeigt eine erfindungsgemäße Spannvorrichtung mit einer Injektorhülse und
Figur 6 zeigt eine erfindungsgemäße Düsenspannmutter mit einer Injektorhülse als Ausschnitt.

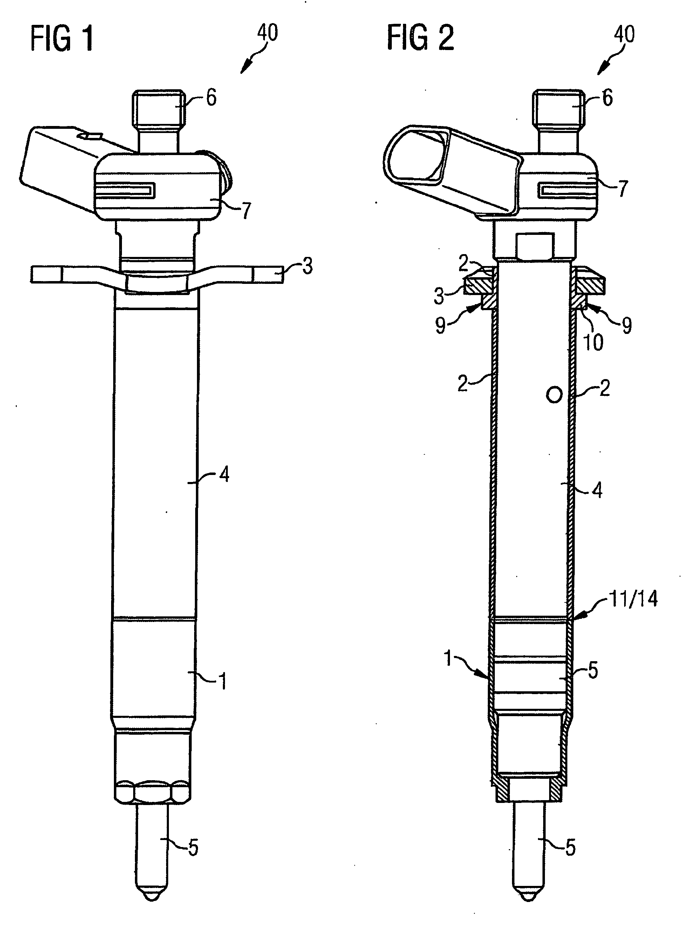

In Figur 1 ist schematisch ein bekannter Injektor 40 dargestellt. Der Injektor 40 weist im oberen Bereich ein Injektorgehäuse 4 auf, das mittels einer Düsenspannmutter 1 mit einem Düsegehäuse 5 verbunden ist, das in unteren Teil des Injektors 40 angeordnet ist. Das Düsengehäuse 5 nimmt in seinem Inneren das eigentliche Ventil, Servoventil usw. auf, mit dem die Kraftstoffinjektion, beispielsweise für ein Direkteinspritzverfahren eines Benzin- oder Dieselmotors gesteuert wird. Das Düsengehäuse 5 besitzt zu diesem Zweck an seinem unteren Ende eine Kegelspitze, an der in der Regel mehrere Spritzlöcher angeordnet sind, durch die der Kraftstoff seitlich austreten kann, wenn das Ventil angesteuert wird.

Das Injektorgehäuse 4 weist in seinem oberen Bereich eine oder zwei sich gegenüberliegende Aussparungen auf, in die eine Spannpratze 3 greift. Die Spannpratze 3 wird mittels (in Figur 1 nicht dargestellten) Schrauben, die im Zylinderkopf der Brennkraftmaschine eingelassen sind, so verschraubt, dass der Injektor 40 mit hoher Kraft mit seinem unteren Sitz gegen einen Dichtsitz im Zylinderkopf gepresst wird. Da die Druckkraft über die Spannpratze 3 relativ weit oben am Injektor 40 eingeleitet wird, bewirken die Kraftlinien, die über das Injektorgehäuse 4 nach unten in Richtung der Dichtfläche am Zylinderkopf abgeleitet werden, dass das Injektorgehäuse 4 in axialer Richtung etwas verkürzt wird. Diese Verkürzung, die im µm-Bereich liegt, wird von den im Injektor 40 befindlichen beweglichen Bauteilen, beispielsweise dem Antriebselement und dem Servoventil nicht nachvollzogen, so dass ihre vorgesehene freie Beweglichkeit, die für die Steuerung des Ventils unbedingt notwendig ist, eingeschränkt ist. Bisher wurde dieses Problem dadurch gelöst, dass die genannten beiden Bauteile mit einem entsprechend großen Spiel gefertigt und verbaut wurden.

Vollständigkeitshalber sei noch erwähnt, dass an dem oberen Ende des Injektorgehäuses 4 ein Anschlusskörper 7 vorgesehen ist, der sowohl die elektrischen Zuleitungen für die Steuerung eines vorzugsweise piezoelektrischen Aktors sowie einen Hochdruckanschluss 6 für die Kraftstoffzufuhr aufweist.

Figur 2 zeigt ein Ausführungsbeispiel der Erfindung, bei dem im wesentlichen der zuvor beschriebene Injektor 40 mit den zu Figur 1 beschriebenen Teilen im Querschnitt dargestellt ist. Die Bezugszeichen mit gleicher Nummer haben die gleiche Bedeutung. Nachfolgend werden daher im wesentlichen nur die Unterschiede erläutert.

Bei dem erfindungsgemäßen Injektor 40 wurde zusätzlich das Injektorgehäuse 4 mit einer zylinderförmigen Injektorhülse 2 ummantelt. Die Injektorhülse 2 ist aus einer geeigneten Stahllegierung druckresistent ausgebildet und weist an ihrem oberen Ende eine Kopfteil 10 auf, das mit der Injektorhülse 2 kraftschlüssig verbunden ist. Es wird entweder zusammen mit der Injektorhülse 2 einstückig oder als separates Bauteil hergestellt.

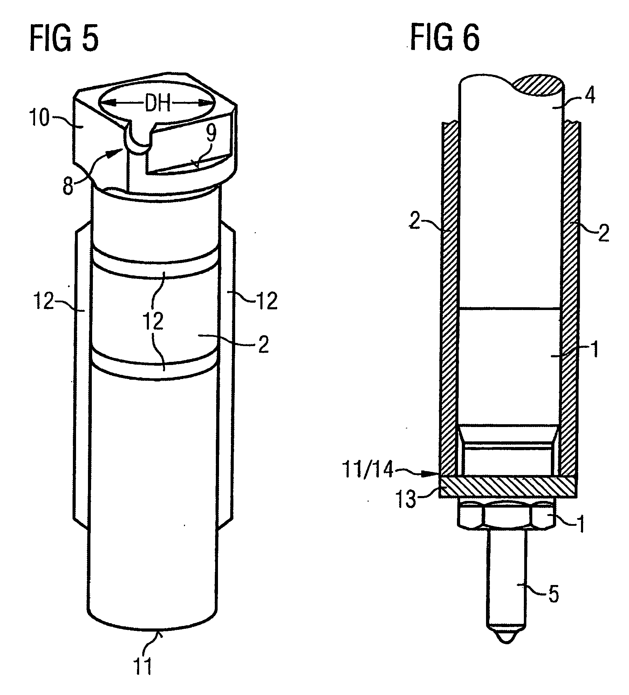

Das Kopfteil 10 weist wenigstens ein, vorzugsweise zwei sich gegenüber liegende Druckflächen 9, die zu Figur 5 später noch genauer erläutert werden. Auf diesen Druckflächen 9 wird eine entsprechend ausgebildete gabelförmige Spannratze 3 so angeordnet, dass sie nur die Injektorhülse 2, nicht aber das Injektorgehäuse 4 in axialer Richtung nach untern drückt.

Das untere Ende der Injektorhülse 2 weist eine Auflagefläche 11 auf, mit der sich die Injektorhülse 2 gegen eine entsprechend ausgebildete Gegenfläche 14 der Düsenspannmutter 1 abstützt.

Bei einem bevorzugten Ausführungsbeispiel der Erfindung ist vorgesehen, dass die Düsenspannmutter 1 so ausgeformt ist, dass ihre Gegenfläche 14 stirnseitig angeordnet ist. Dadurch kann die Injektorhülse 2 mit ihrer Auflagefläche 11 so ausgebildet werden, dass der Injektor 40 einen durchgehenden glatten, zylindrischen Körper bildet. Die Injektorhülse 2 ist dann als eigenständiges Bauteil fast nicht mehr zu erkennen.

Um dieses zu erreichen, muss die Injektorhülse 2 vor dem Zusammenschrauben des Injektorhäuses 4 mit dem Düsengehäuse 5 auf das Injektorgehäuse 4 aufgeschoben werden. Der Innendurchmesser ist so bemessen, dass die Injektorhülse 2 an der Außenwandung des Injektorgehäuses 4 eng anliegt, aber noch etwas verschiebbar ist. Seine Länge wird so bemessen, dass das Kopfteil 10 nach der Befestigung noch etwas aus dem Zylinderkopf herausragt, damit für die Spannpratze 3 ein guter Zugang zu den Druckflächen 9 besteht.

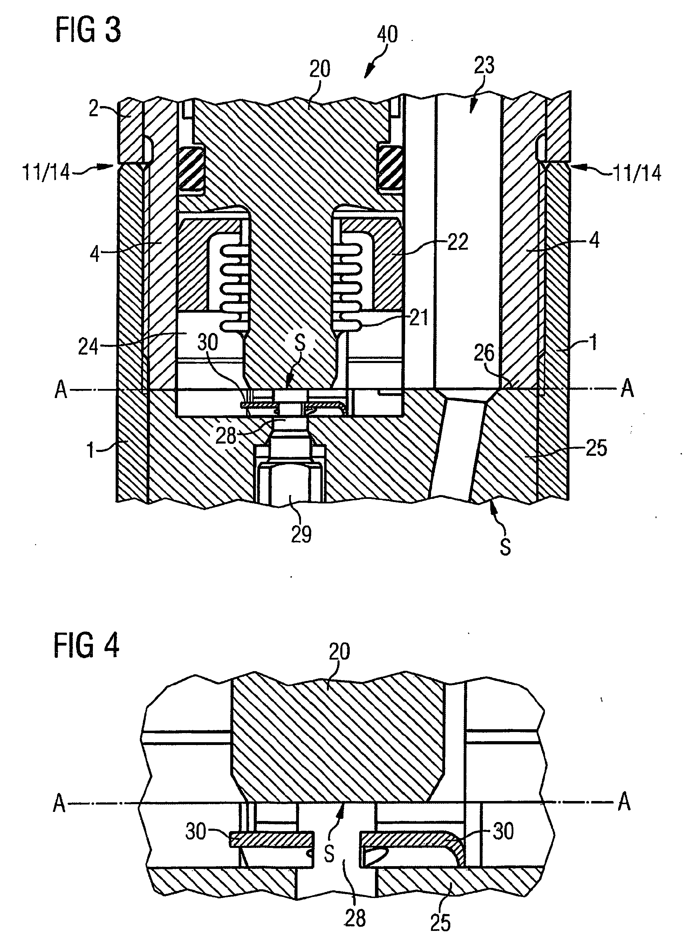

In Figur 3 ist ein Ausführungsbeispiel der Erfindung dargestellt, bei dem der Aufbau des Injektors 40 als Längsschnitt dargestellt ist. Figur 3 zeigt eine Teilansicht des Injektors 40, die insbesondere den Bereich zwischen der Injektorhülse 2 und der Düsenspannmutter 1 betrifft.

Im oberen Bereich von Figur 3 ist ein Teil der Injektorhülse 2 erkennbar, die mit ihrer unteren Auflagefläche 11 stirnseitig auf einer Gegenfläche 14 der Düsenspannmutter 1 aufliegt. Es wird dabei angenommen, dass in dieser Position die Injektorhülse 2 fest gegen die Düsenspannmutter 1 gepresst wird. Die schraffierte Fläche im Innern des Injektors 40 ist als Bodenplatte 20 gekennzeichnet, die von einem darüber angeordneten Antriebselement, insbesondere einem piezoelektrischen Aktor (in Figur 3 nicht näher dargestellt) in axialer Richtung nach unten betätigt werden kann. Die Bodenplatte 20 weist im unteren Bereich einen Zapfen auf, der auf.einen sich darunter befindlichen Ventilstößel 28 eines Servoventils 29 drückt. Zwischen dem Zapfen und der Injektorwand 4 befindet sich ein Leckageraum 24, der durch einen eingepressten Stahlring 22 und einen Faltenbalg 21 abgedichtet ist.

Im rechten oberen Teil von Figur 3 befindet sich eine Hochdruckbohrung 23, die mit Kraftstoff gefüllt ist. An der Schnittlinie A-A ist eine Hochdruckdichtfläche 26 ausgebildet, die durch das Zusammenfügen des Injektorgehäuses 4 mit dem Düsengehäuse 5 mittels der Düsenspannmutter 1 entsteht. Der unter der Schnittlinie A-A befindliche schraffierte Teil zeigt eine Ventilplatte 25 des Düsengehäuses 5. In der Ventilplatte 25 ist der Ventilstößel 28 beweglich angeordnet. Er wird von einem Federblech 30 nach oben gezogen, um in Ruhestellung sicherzustellen, dass das Ventil geschlossen bleibt. Genau an der Schnittlinie A-A ist zwischen dem Zapfen der Bodenplatte 20 und dem Ventilstößel 28 das Spiel S vorgesehen, das beispielweise 0,01 mm groß ausgebildet sein kann. Wie bereits erläutert, besitzt dieses Spiel S eine entscheidende Bedeutung für die einwandfreie Funktion des Injektors 40 nach der Befestigung im Zylinderkopf der Brennkraftmaschine.

Figur 4 zeigt eine vergrößerte Teilansicht des Injektors 40 aus Figur 3. Es zeigt den Bereich mit der Schnittlinie A-A. Die Pfeilspitze zeigt im wesentlichen auf den Zapfen der Bodenplatte 20 und den darunter angeordneten Ventilstößel 28, zwischen denen das Spiel S vorgesehen ist. Wegen der geringen Größe ist das Spiel S in Figur 4 leider nicht maßstabsgerecht darstellbar. Das Spiel S ist lediglich dann vorhanden, wenn der Aktor nicht angesteuert ist und dadurch der Ventilstößel 28 durch das Federblech 30 nach unter gedrückt wird. Im anderen Fall, wenn der Aktor angesteuert wird, muss zum Öffnen des Ventils der zum Öffnen des Ventils erforderliche Hubweg sowie auch das Spiel S überwunden werden.

Wurde dagegen - wie beim Stand der Technik möglich - das Spiel S durch das Verkürzen des Injektorgehäuses 4 zu klein, dann konnte es vorkommen, dass das Ventil nicht Kraftstoff dicht verschlossen wurde. Durch die erfindungsgemäße Ableitung der Kraftlinien über die Injektorhülse 2 kann dieses Problem dagegen nicht mehr auftreten.

Figur 5 zeigt eine erfindungsgemäße Spannvorrichtung mit einer Injektorhülse 2. An ihrem Kopfteil 10 sind vorzugsweise zwei sich gegenüberliegende Druckflächen 9 für die Spanpratze 3 eingearbeitet. Mittels einer Justagemarkierung 8 läst sich die Montage orientierungsgerecht durchführen. Am unteren Ende der Injektorhülse 2 ist auf die Auflagefläche 11 hingewiesen.

In alternativer Ausgestaltung der Erfindung ist vorgesehen, am äußeren Umfang der Injektorhülse 2 axiale oder ringförmige Führungsrippen anzuordnen, um eine sicher Führung und Fixierung in der Bohrung des Zylinderkopfes zu erhalten. Der Innendurchmesser DH entspricht praktisch dem Außendurchmesser des Injektorgehäuses 4, durch den der Injektor 40 gehalten wird.

In Figur 6 ist eine alternative Lösung für die Düsenspannmutter 1 gezeigt. Um die Kraftlinien möglichst tief einleiten zu können, ist im unteren Bereich der Düsenspannmutter 1 ein Auflagering 13 für die Injektorhülse 2 angeordnet. Die Injektorhülse 2 kann somit an der Gegenfläche 14 des Auflageringes 13 aufliegen. Unterhalb der Düsenspannmutter 1 ragt noch ein Teil des Düsengehäuses 15 heraus.

## Patentansprüche

1. Injektor für die Kraftstoffeinspritzung in einen Zylinder einer Brennkraftmaschine, mit einem Injektorgehäuse (4) und einem Düsengehäuse (5), die mittels einer Düsenspannmutter (1) axial zusammenfügbar sind, wobei
- der Injektor (40) zur Befestigung in einer Bohrung eines Zylinderkopfes der Brennkraftmaschine einführbar ist,
- eine Spannpratze (3) vorgesehen ist, mit der das Düsengehäuse (5) des Injektors (40) gegen eine Dichtfläche am Zylinderkopf pressbar ist,
- auf dem Mantel des Injektorgehäuses (4) zwischen der Spannpratze (3) und der Düsenspannmutter (1) eine druckresistente zylinderförmige Injektorhülse (2) angeordnet ist und
- die Injektorhülse (2) an ihrem unteren Ende eine Auflagefläche (11) aufweist, mit der sie sich gegen eine Gegenfläche (14) der Düsenspannmutter (1) abstützt,
wobei die Länge der Injektorhülse so bemessen ist, dass die Injektorhülse (2) nach ihrem Einbau in der Bohrung eine vorgegebene Länge aus dem Zylinderkopf herausragt,
**dadurch gekennzeichnet, dass** die Injektorhülse (2) an ihrem oberen Ende ein Kopfteil (10) mit wenigstens einer Druckfläche (9) aufweist und dass das Kopfteil (10) mit der Injektorhülse (2) entweder fest verbunden ist oder als separates Bauteil auf der Injektorhülse (2) aufgesetzt ist, wobei die Druckfläche derart ausgeformt ist, dass sie angepasste Aufnahmeflächen für die Spannpratze enthält.

2. Injektor nach einem der vorhergehenden Ansprüche, **dadurch gekennzeichnet, dass** die Injektorhülse (2) auf dem Mantel des Injektorgehäuses (4) verschiebbar angeordnet ist.

3. Injektor nach einem der vorhergehenden Ansprüche, **dadurch gekennzeichnet, dass** der Innendurchmesser (DH der Injektorhülse (2) so bemessen ist, dass die Injektorhülse (2) mit ihrer Innenwandung eng an dem Mantel des Injektorgehäuses (4) anliegt.

4. Injektor nach einem der vorhergehenden Ansprüche, **dadurch gekennzeichnet, dass** die Injektorhülse (2) an ihrem äußeren Umfang wenigstens eine Rippen (12) aufweist, die zur Stützung des Injektors (40) den Zwischenraum zwischen der Innenwandung der Zylinderbohrung und dem Außenmantel der Injektorhülse (2) ausfüllt.

5. Injektor nach einem der vorhergehenden Ansprüche, **dadurch gekennzeichnet, dass** die Spannpratze (3) zwei gabelförmig ausgebildete Spannarme aufweist und dass zwischen den Spannarmen der Injektor (2) derart einführbar ist, dass die beiden Spannarme bezogen auf den Umfang der Injektorhülse (2) an zwei sich gegenüberliegenden Aufnahmeflächen (9) der Injektorhülse (2) aufliegen.

6. Injektor nach einem der vorhergehenden Ansprüche, **dadurch gekennzeichnet, dass** vor der Verschraubung des Injektorgehäuses (4) mit dem Düsengehäuse (5) die Injektorhülse (2) auf das Injektorgehäuse (4) aufschiebbar ist und dass danach das Injektorgehäuse (4) und das Düsengehäuse (5) mittels der Düsenspannmutter (1) verschraubbar sind.

7. Injektor nach einem der vorhergehenden Ansprüche, **dadurch gekennzeichnet, dass** die Düsenspannmutter (1) an einer geeigneten Stelle ihres Umfangs, vorzugsweise im unteren Bereich einen Auflagering (13) für die Injektorhülse (2) aufweist.

8. Spannvorrichtung mit einer Injektorhülse (2) für die Befestigung eines Injektors (40) in einer Bohrung eines Zylinderkopfes einer Brennkraftmaschine nach einem der vorhergehenden Ansprüche, **dadurch gekennzeichnet, dass** die Injektorhülse (2) an ihrem oberen und unteren Ende eine Druckfläche (9) beziehungsweise eine Auflagefläche (11) aufweist, die zur Auflage auf einer Gegenfläche (14) der Düsenspannmutter (1) beziehungsweise der Spannpratze (3) geeignet sind, dass die Injektorhülse (2) mit einen Innendurchmesser (DH) ausgebildet ist, der den Injektor (40) mit einem geringen Gleitspiel eng umschließt und dass die Länge der Injektorhülse (2) derart gewählt ist, dass nach der Befestigung des Injektors (40) im Zylinderkopf die Spannpratze (3) oberhalb des Zylinderkopfes montierbar ist.

## Claims

1. Injector for injecting fuel into a cylinder of an internal combustion engine, having an injector housing (4) and having a nozzle housing (5) which can be joined together axially by means of a nozzle clamping nut (1), wherein
- the injector (40) can be inserted for fastening in a bore of a cylinder head of the internal combustion engine,
- a clamping bracket (3) is provided by means of which the nozzle housing (5) of the injector (40) can be pressed against a sealing surface on the cylinder head,
- a pressure-resistant cylindrical injector sleeve (2) is arranged on the shell of the injector housing (4) between the clamping bracket (3) and the nozzle clamping nut (1), and
- the injector sleeve (2) has, on its lower end, a bearing surface (11) by means of which it is supported against a counterpart surface (14) of the nozzle clamping nut (1),
wherein the length of the injector sleeve is dimensioned such that the injector sleeve (2), after the installation thereof in the bore, projects with a predefined length out of the cylinder head,
**characterized in that** the injector sleeve (2) has, on its upper end, a head part (10) with at least one pressure surface (9), and **in that** the head part (10) is either fixedly connected to the injector sleeve (2) or is mounted as a separate component on the injector sleeve (2), wherein the pressure surface is shaped so as to have matched receiving surfaces for the clamping bracket.

2. Injector according to one of the preceding claims, **characterized in that** the injector sleeve (2) is arranged in a displaceable manner on the shell of the injector housing (4).

3. Injector according to one of the preceding claims, **characterized in that** the inner diameter (DH) of the injector sleeve (2) is dimensioned such that the injector sleeve (2) abuts with its inner wall tightly against the shell of the injector housing (4).

4. Injector according to one of the preceding claims, **characterized in that** the injector sleeve (2) has on its outer circumference at least one rib (12) which, to support the injector (40), fills out the intermediate space between the inner wall of the cylinder bore and the outer shell of the injector sleeve (2).

5. Injector according to one of the preceding claims, **characterized in that** the clamping bracket (3) has two clamping arms of fork-shaped form, and **in that** the injector (2) can be inserted between the clamping arms such that the two clamping arms bear, with respect to the circumference of the injector sleeve (2), against two opposite receiving surfaces (9) of the injector sleeve (2).

6. Injector according to one of the preceding claims, **characterized in that**, before the injector housing (4) is screwed to the nozzle housing (5), the injector sleeve (2) can be pushed onto the injector housing (4), and **in that** subsequently the injector housing (4) and the nozzle housing (5) can be screwed together by means of the nozzle clamping nut (1).

7. Injector according to one of the preceding claims, **characterized in that** the nozzle clamping nut (1) has, at a suitable point on its circumference, preferably in the lower region, a bearing ring (13) for the injector sleeve (2).

8. Clamping device having an injector sleeve (2) for fastening an injector (40) in a bore of a cylinder head of an internal combustion engine according to one of the preceding claims, **characterized in that** the injector sleeve (2) has, at its top end and at its bottom end, a pressure surface (9) and a bearing surface (11) respectively which are suitable for bearing on a counterpart surface (14) of the nozzle clamping nut (1) and on the clamping bracket (3) respectively, **in that** the injector sleeve (2) is formed with an inner diameter (DH) which tightly surrounds the injector (40) with a small sliding clearance, and **in that** the length of the injector sleeve (2) is selected such that, after the fastening of the injector (40) in the cylinder head, the clamping bracket (3) can be mounted above the cylinder head.

## Revendications

1. Injecteur permettant l'injection de carburant dans un cylindre d'un moteur à combustion interne, avec un boîtier d'injecteur (4) et un boîtier de buse (5), qui peuvent être réunis axialement au moyen d'un écrou de serrage (1) de la buse, dans lequel
- l'injecteur (40) peut être introduit pour être fixé dans un alésage d'une culasse du moteur à combustion interne,
- une griffe de serrage (3) est prévue, au moyen de laquelle le boîtier de buse (5) de l'injecteur (40) peut être pressé contre une surface étanche sur la culasse,
- une gaine d'injecteur (2) cylindrique et résistante à la pression est agencée sur l'enveloppe du boîtier d'injecteur (4) entre la griffe de serrage (3) et l'écrou de serrage (1) de la buse, et
- la gaine d'injecteur (2) présente sur son extrémité inférieure une surface d'appui (11) avec laquelle elle s'appuie contre une surface opposée (14) de l'écrou de serrage (1),
dans lequel la longueur de la gaine d'injecteur est choisie de telle sorte que la gaine d'injecteur (2), après son montage dans l'alésage, s'avance hors de la culasse sur une longueur prédéfinie,
**caractérisé en ce que** la gaine d'injecteur (2) présente, au niveau de son extrémité supérieure, une partie formant tête (10) avec au moins une surface de pression (9), et **en ce que** la partie formant tête (10) est soit fermement reliée à la gaine d'injecteur (2), soit posée en tant qu'élément séparé sur la gaine d'injecteur (2), dans lequel la surface de pression est formée de telle sorte qu'elle contient des surfaces de réception adaptées à la griffe de serrage.

2. Injecteur selon l'une des revendications précédentes, **caractérisé en ce que** la gaine d'injecteur (2) est agencée de manière déplaçable sur l'enveloppe du boîtier d'injecteur (4).

3. Injecteur selon l'une quelconque des revendications précédentes, **caractérisé en ce que** le diamètre intérieur (DH) de la gaine d'injecteur (2) est choisi de telle sorte que la gaine d'injecteur (2) adhère uniformément avec sa paroi intérieure contre l'enveloppe du boîtier d'injecteur (4).

4. Injecteur selon l'une quelconque des revendications précédentes, **caractérisé en ce que** la gaine d'injecteur (2) présente, sur son pourtour extérieur, au moins un renfort (12) qui, pour supporter l'injecteur (40), remplit l'espace intermédiaire entre la paroi intérieure de l'alésage du cylindre et l'enveloppe extérieure de la gaine d'injecteur (2).

5. Injecteur selon l'une quelconque des revendications précédentes, **caractérisé en ce que** la griffe de serrage (3) présente deux bras de serrage formant une fourche, et **en ce que** l'injecteur (2) peut être introduit entre les bras de serrage de telle sorte que, par rapport au pourtour de la gaine d'injecteur (2), les deux bras de serrage sont appuyés contre deux surfaces de réception (9) mutuellement opposées de la gaine d'injecteur (2).

6. Injecteur selon l'une quelconque des revendications précédentes, **caractérisé en ce que** la gaine d'injecteur (2) peut être emmanchée sur le boîtier d'injecteur (4) avant le vissage du boîtier d'injecteur (4) avec le boîtier de buse (5), et **en ce que** le boîtier d'injecteur (4) et le boîtier de buse (5) peuvent ensuite être vissés au moyen de l'écrou de serrage (1) de la buse.

7. Injecteur selon l'une quelconque des revendications précédentes, **caractérisé en ce que** l'écrou de serrage (1) de la buse présente, à un emplacement approprié de son pourtour, de préférence dans la région inférieure, une bague d'appui (13) pour la gaine d'injecteur (2).

8. Dispositif de serrage avec une gaine d'injecteur (2) pour fixer un injecteur (40) dans un alésage d'une culasse d'un moteur à combustion interne selon l'une quelconque des revendications précédentes, **caractérisé en ce que** la gaine d'injecteur (2) présente, au niveau de son extrémité supérieure et inférieure, respectivement une surface de pression (9) et une surface d'appui (11), qui sont appropriées pour prendre appui sur une surface opposée (14) de l'écrou de serrage (1) et respectivement de la griffe de serrage (3), **en ce que** la gaine d'injecteur (2) est réalisée avec un diamètre intérieur (DH) qui enserre l'injecteur (40) étroitement et avec un faible jeu, et **en ce que** la longueur de la gaine d'injecteur (2) a été choisie de telle sorte qu'après la fixation de l'injecteur (40) dans la culasse, la griffe de serrage (3) puisse être montée au-dessus de la culasse.
